## Europäisches Patentamt
## European Patent Office
## Office européen des brevets

(11) Veröffentlichungsnummer: **0 258 475**
**B1**

(12) **EUROPÄISCHE PATENTSCHRIFT**

(45) Veröffentlichungstag der Patentschrift:
05.12.90

(51) Int. Cl.⁵: **F16K 51/02**, F16K 3/18

(21) Anmeldenummer: 86112121.8

(22) Anmeldetag: 02.09.86

(54) Vakuumschieber.

(43) Veröffentlichungstag der Anmeldung:
09.03.88 Patentblatt 88/10

(45) Bekanntmachung des Hinweises auf die Patenterteilung:
05.12.90 Patentblatt 90/49

(84) Benannte Vertragsstaaten:
AT BE CH DE FR GB IT LI NL SE

(56) Entgegenhaltungen:
FR-A- 1 310 817
FR-A- 1 501 154
FR-A- 2 283 375
US-A- 1 830 999

PATENT ABSTRACTS OF JAPAN, Band 7,
Nr. 271 (M-260)[1416], 3. Dezember 1983; &
JP-A-58 149 489 (KOUENERUGII BUTSURIGAKU
KENKYUSHO) 05.09.1983

(73) Patentinhaber: PERKIN-ELMER-METCO GMBH, Am
Eisernen Steg 18, D-6234 Hattersheim 1(DE)

(72) Erfinder: Höhle, Hans-Michael, Dr., Stahlbühlring 151,
D-6802 Ladenburg(DE)
Erfinder: Pick, Werner, Ostring 7, D-6483 Bad
Soden-Salmünster(DE)
Erfinder: Malakas, Michael, Brkenhainer Strasse 5,
D-6464 Linsengericht(DE)

(74) Vertreter: Patentanwälte Grünecker, Kinkeldey,
Stockmair & Partner, Maximilianstrasse 58,
D-8000 München 22(DE)

**Beschreibung**

Die Erfindung betrifft einen Vakuumschieber insbesondere zum Einsatz in staubhaltiger Atmosphäre mit einem Schiebergehäuse, in dem der Schieber in eine Offenstellung und in eine Schließstellung derart bewegbar ist, daß in der Schließstellung eine Dichtfläche des Schiebers gegen einen Dichtring gedrückt wird, der innerhalb des Schiebergehäuses um eine in der Schiebergehäusewand ausgebildete, vom Schieber in der Schließstellung verschlossene Öffnung umläuft, wobei die Dichtfläche des Schiebers mit wenigstens einer umlaufenden Dichtschneide versehen ist, die von der Dichtfläche absteht und in der Schließstellung gegen den Dichtring gedrückt ist, und an der Innenfläche der Schiebergehäusewand wenigstens ein umlaufender Stützvorsprung vorgesehen ist, über den sich der Dichtring gegenüber der Schiebergehäusewand abstützt.

Schieber dieser Art, die beispielsweise Öffnungen von Vakuumkammern abschließen oder freigeben können, sind in vielfachen Ausführungsformen bekannt. Dabei ist der Schieber in einem Gehäuse linear hin- und herbewegbar, wobei er in einer Stellung eine Öffnung abschließt, die an der Schiebergehäusewand angeordnet ist und beispielsweise zu einer Vakuumkammer führt. Zum Abschließen der Öffnung legt sich eine am Schieber ausgebildete Dichtfläche gegen einen die Öffnung umgebenden Dichtring an. Hierzu wird der Schieber in Richtung auf den Dichtring beaufschlagt.

Mit solchen Schiebern lassen sich in staubfreien Atmosphären geringe Leckraten erzielen, mit anderen Worten, ein guter vakuumdichter Abschluß herstellen. Sobald jedoch der Schieber in staubhaltiger Atmosphäre eingesetzt wird, versagen diese bekannten Schieber. Dies liegt daran, daß die üblichen Systeme, die mit O-Ring und Stützring- bzw. mit Metallringdichtungen arbeiten, gegen die die Dichtflächen des Schiebers gepreßt werden, gegenüber Staub sehr empfindlich sind. Insbesondere Metallstaub, der sich auf den Dichtringen absetzt, führt zu einer stark erhöhten Leckrate bei derartigen Schiebersystemen.

Staubhaltige Atmosphäre tritt in vielen Anwendungsgebieten auf. Als ein Beispiel hierfür können die Plasmaspritzverfahren angeführt werden. Beim Plasmaspritzen wird ein Werkstück im Vakuum mit einer Schutzschicht überzogen. Die Schicht wird dabei unter Verwendung einer Plasmasflamme im Vakuum auf das Werkstück aufgetragen. Zur Entnahme und zum Einschieben dieses Werkstücks ist für jeden Arbeitsvorgang das Öffnen der Vakuumkammer, in die Schicht aufgetragen wird, notwendig. Hierzu können Schieber mit solchen Dichtflächen eingesetzt werden. Dabei besteht jedoch die Gefahr, daß sich die Dichtflächen der Schieber mit dem Metallstaub, der in der Vakuumkammer beim Spritzen entsteht, bedecken bzw. durch diesen Staub verunreinigt werden, so daß die Dichtwirkung des Schiebers stark beeinträchtigt wird. Dies führt zu relativ hohen Leckraten, die den Spritzprozeß negativ beeinflussen.

Ein Abdichtmechanismus der eingangs erwähnten Art ist aus der JP-A 58 149 489 bekannt. Zwischen zwei einander gegenüberliegenden Dichtflächen des Abdichtmechanismus ist ein Dichtring aus einem verhältnismäßig weichen Material vorgesehen, wobei aus einer Dichtfläche zwei beabstandete Dichtschneiden und aus der anderen Dichtfläche ein zum Dichtring hin abgeflachter Stützvorsprung vorstehen. Im abgedichteten Zustand sind die Dichtschneiden und der Stützvorsprung von einander gegenüberliegenden Seiten gegen den Dichtring gepreßt, wobei der Stützvorsprung im Bereich zwischen den beiden Dichtschneiden gegen den Dichtring zur Anlage kommt. Durch einen solchen Abdichtmechanismus wird gegenüber Mechanismen mit weitgehend ebenen Dichtflächen einen verbesserte Abdichtwirkung erzielt.

Es ist die Aufgabe der vorliegenden Erfindung, einen Schieber der eingangs genannten Art zu schaffen, der in der Lage ist, auch in staubhaltiger Atmosphäre eine Vakuumkammer so abzuschließen, daß die Leckrate wesentlich kleiner als bei bekannten Vakuumschiebern ist.

Gelöst wird diese Aufgabe bei einem Schieber der eingangs erwähnten Art dadurch, daß der Stützvorsprung als Stützschneide ausgebildet ist, und daß die Dichtschneide und die Stützschneide so angeordnet sind, daß sich ihre jeweiligen Vorderkanten in der Schließstellung gegenüberstehen, so daß der Dichtring in der Schließstellung zwischen wenigstens einem, eine Dichtschneide und Stützschneide umfassenden Schneidpaar ohne Scherung eingeklemmt ist.

Indem erfindungsgemäß vorgesehen wird, daß der Stützvorsprung als Stützschneide ausgebildet und der Stützschneide gegenüberliegend angeordnet ist, wird mit relativ geringen Anpreßkräften ein sehr hoher Anpreßdruck erzielt, was eine entsprechend gute Dichtwirkung nach sich zieht. Da die Dichtschneiden und die Stützschneiden einander gegenüberliegend angeordnet sind, wird verhindert, daß der lediglich über die Schneide abgestützte Dichtring bei Anpressen des Schiebers zu sehr verformt wird. Die aufeinanderzuweisenden Vorderkanten der korrespondierend angeordnet und umlaufenden Stützschneiden bzw. Dichtschneiden treffen exakt aufeinander und verpressen den Dichtring zwischen sich. Selbst bei Verunreinigungen, wie Metallstaub oder dergleichen, der sich auf dem Dichtring ablagert, bewirkt das Aufsetzen der Schneidkante der Dichtschneide und das Aufsetzen der Schneidkante der Stützschneide auf den Dichtring, daß die Staubpartikel aufgrund des sich dann einstellenden hohen Drucks entweder weiter verfeinert oder aber unter Gewährleistung einer geringen Leckrate mit in den Dichtring hineingepreßt werden.

Bei einer bevorzugten Ausführungsform sind an der Dichtfläche des Schiebers und an der Innenwand des Schiebergehäuses jeweils zwei umlaufende Dichtschneiden bzw. Stützschneiden vorgesehen, wobei sich die Vorderkanten jeweils einer Dichtschneide und der zugeordneten Stützschneide in der Schließstellung gegenüberliegen. Die umlaufenden Dichtschneiden bzw. Stützschneiden verbessern weiter die Dichtwirkung, da der Dichtring zweifach umlaufend eingeklemmt wird. Mit einer derartigen Dichtung wurden trotz Metallstaubverschmutzungen auf dem Dichtring Leckraten von weniger als $10^{-3}$ mbar l/s erzielt.

Eine weitere Ausgestaltung der Erfindung sieht vor, daß der Dichtring am Schiebergehäuse mittels Schrauben schwimmend befestigt ist. Mit schwimmend ist dabei gemeint, daß der Dichtring lediglich an den Stützschneiden abgestützt ist und ansonsten von nur wenigen Schrauben in dieser Stellung gehalten wird. Dadurch kann der Dichtring ohne eine Verbiegung zu erfahren, zwischen die Dicht- bzw. Stützschneiden eingeklemmt werden. Durch die Fixierung mit nur wenigen Schrauben kann der Dichtring schnell und einfach ausgetauscht werden, wenn dies erforderlich ist.

In einer weiteren sehr vorteilhaften Ausgestaltung der Erfindung ist vorgesehen, daß der Schieber einen Schieberhauptteil und einen Schieberteller aufweist, wobei am Schieberteller die Dichtfläche ausgebildet ist und am Hauptteil eine Kolbenstange zum Bewegen des Schiebers angreift und daß Mittel zur Kraftübertragung auf den Schieberteller derart vorgesehen sind, daß dieser vom Schieberhauptteil zum Herbeiführen der Schließstellung axial auf den Dichtring gepreßt und zu Beginn des Öffnungsvorganges entgegengesetzt in Axialrichtung außer Eingriff mit dem Dichtring gebracht wird. Diese zweiteilige Ausbildung des Schiebers ermöglicht es mit Hilfe von Kraftübertragungsmitteln, den Schieber allein in einer Linearbewegung von der Schließ- in die Öffnungsbewegung und umgekehrt antreiben zu können, trotzdem aber die Dichtfläche, welche auf dem Schieberteller befestigt ist, axial gegen den Dichtring zu pressen, also in eine Richtung, die quer zur Verschieberichtung des Schiebers beim Öffnen- und Schließvorgang läuft. Das axiale Aufsetzen und Absetzen des Schiebertellers an den Dichtring verhindert eine Reibungsabnutzung des Dichtrings, die sich einstellen würde, wenn die Dichtfläche beim Aufsetzen seitlich über den Dichtring geschoben werden müßte.

Zur Kraftübertragung ist bei einer bevorzugten Ausführungsform wenigstens ein Anschlag vorgesehen, der die lineare Schieberbewegung des Schiebertellers in einer Lage stoppt, in der die Dichtschneiden des Schiebertellers mit den Stützschneiden ausgerichtet sind und es ist vorgesehen, daß an dem Schieberteller eine Keilnase und an dem Schieberhauptteil eine korrespondierende Keilfläche derart ausgebildet ist, daß der Schieberteller beim Schließvorgang nach dem Aufsetzen auf dem Anschlag durch eine weitere Linearbewegung des Schieberhauptteils axial auf den Dichtring gedrückt wird. Die Umsetzung der Linearbewegung des Schieberhauptteils in eine axial gerichtete Bewegung auf den Dichtring zu, geschieht bei dieser Lösung mit Hilfe von aufeinandergleitenden korrespondierende Keilflächen zwischen Schieberteller und Schieberhauptteil. Die Abstützung des Schieberhauptteils zur Verhinderung einer weiteren Linearbewegung in Richtung des Schiebers wird mit Hilfe eines einfachen Anschlags herbeigeführt. Dies stellt eine einfache Möglichkeit dar, zu erreichen, daß der Schließteller erst in der Schließposition mit seinen Dichtschneiden über einen Keil auf den Dichtring gedrückt wird.

In einer weiteren vorteilhaften Ausgestaltung ist in diesem Zusammenhang vorgesehen, daß der Schieberteller mit dem Schieberhauptteil über Federn verbunden ist, die so angeordnet sind, daß sie den Schieberteller vom Dichtring weg beaufschlagen. Diese Maßnahme hat zur Folge, daß beim Öffnen in dem Moment, wie die Keilflächen auseinandergefahren werden und der Anpreßdruck dadurch verringert wird, die Feder den Schiebreteller gegen den Schieberhauptteil zieht, d.h., weg vom Dichtring, so daß der Schieberteller in Axialrichtung auch beim Öffnungsvorgang zunächst vom Dichtring weggeführt wird. Die Federn halten dann beim anschließenden Öffnungsvorgang und der hierzu erforderlichen linearen Verschiebebewegung des Schiebers den Schieberteller an dem Schieberhauptteil. Die Federkraft ist so bemessen, daß sie durch den Andrückvorgang und die erzielte Keilwirkung beim Schließvorgang einfach überwunden werden kann.

In einer weiteren Ausgestaltung der Erfindung ist vorgesehen, daß im Schiebergehäuse Führungen angeordnet sind, an denen der Schieberhauptteil so geführt ist, daß er keine quer zur Verschieberichtung erfolgende Bewegung ausführt. Diese Führungen stellen sicher, daß eine ausreichende Gegenkraft insbesondere bei der Erzeugung des Schließdruckes vorhanden ist, so daß beim Aufgleiten der Keilflächen aufeinander der Schieberhauptteil nicht ausweicht, sondern vielmehr den Schieberteller gegen den Dichtring preßt.

Als Dichtring kommen insbesondere Dichtringe aus Metall, Kunststoff oder auch Gummi in Frage. Für alle diese Materialien wird durch das Einpressen mit den Schneidkanten der Dichtschneide und insbesondere auch durch die das Gegenlager bildenden Stützschneiden eine ausgezeichnete Dichtwirkung erzielt. Die Dichtringe können flach aber auch oval oder sogar einen runden Querschnitt haben.

Schließlich hat es sich herausgestellt, daß wenn der beschriebene, erfindungsgemäße Schieber zum Abdichten von Arbeitskammern einer Vakuum-Plasmaspritzanlage eingesetzt wird, trotz der dort vorhandenen staubhaltigen Atmosphäre nach über 1000 Öffnungs- und Schließbewegungen immer noch dicht schließt mit einer Leckrate von besser als $10^{-3}$ mbar l/s, so daß die Verwendung eines derartigen Schiebers zu beträchtlichen Vorteilen im Hinblick auf Wartung und Wirksamkeit insbesondere beim Verschließen von Arbeitskammern einer Vakuum-Plasmaspritzanlage führt.

Im folgenden wird der Schieber anhand eines in der Zeichnung dargestellten Ausführungsbeispiels weiter erläutert und beschrieben.

Figur 1 zeigt einen in einem Schiebergehäuse angeordneten Schieber in geschnittener, perspektivischer Darstellung zur Erläuterung des prinzipiellen Aufbaus eines solchen Schiebers,

Figur 2 zeigt das Schiebergehäuse und den Schieber gemäß der Erfindung im Längsschnitt,

Figur 3 zeigt im Detail den Dichtbereich des Schiebers mit dem Schiebergehäuse und

Figur 4 zeigt in einem Querschnitt entlang der Linie IV-IV der Figur 2 den in der Figur 2 dargestellten Schieber.

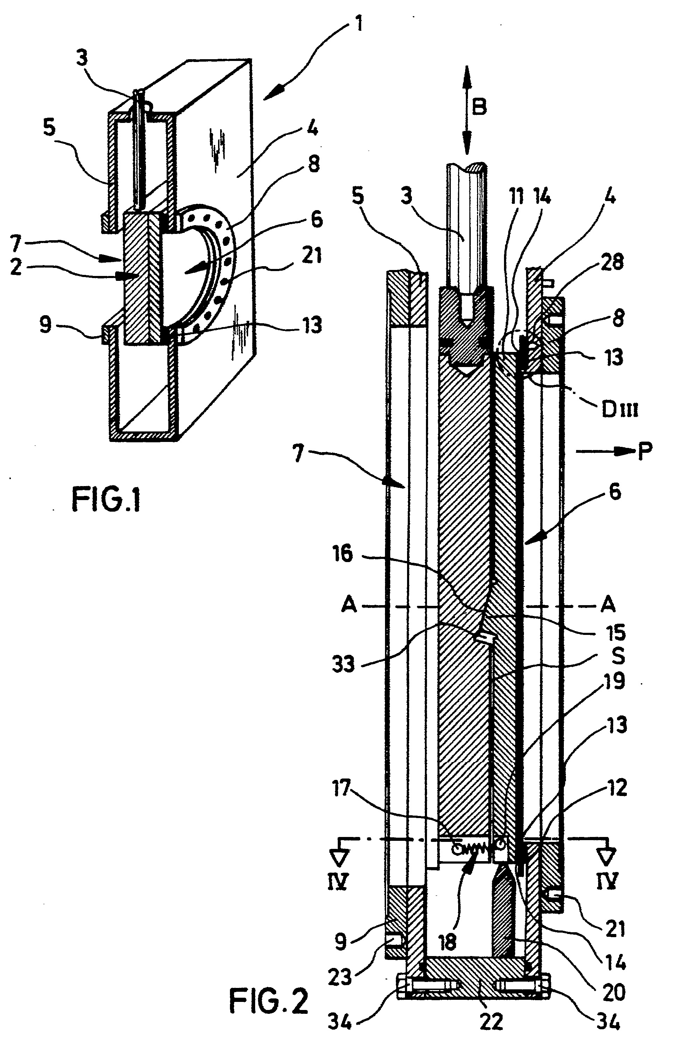

Zunächst soll anhand der Figur 1 der prinzipielle Aufbau eines Schiebers der hier betroffenen Art erläutert werden, bevor dann anhand der Figuren 2 bis 4 die erfindungsgemäßen Ausgstaltungen anhand einer konkreten Ausführungsform erläutert werden.

In Figur 1 bezeichnet das Bezugszeichen 1 ein Schiebergehäuse, in dem in Schieber 2 angordnet ist. Der Schieber 2 kann mit Hilfe einer Kolbenstange 3 in eine nicht dargestellte Offenstellung bewegt werden, wobei der Schieber in der Darstellung der Figur 1 aus der gezeigten Position nach oben so angehoben wird, daß ein Durchgang von der in der Seitenwand 4 vorgesehenen Öffnung 6 zu der in der gegenüberliegenden Seitenwand 5 ausgebildeten Öffnung 7 möglich ist. In der in Figur 1 gezeigten Stellung ist die Kolbenstange 3 nach unten gefahren und hält den Schieber 2 in einer Stellung, in der dieser die Öffnung 6 von der Gehäuseinnenseite her abschließt. Dabei wird der Schieber 2 mit einer noch näher zu beschreibenden Dichtfläche gegen einen Dichtring 13 gepreßt. Der Dichtring 13 ist an der Innenfläche der Seitenwand 4 umlaufend um die Öffnung 6 herum angeordnet.

Der Schieber kann beispielsweise zwischen zwei nicht dargestellte Arbeitskammern einer Plasmaspritzanlage angeordnet werden, so daß die Kammern dann vakuumdicht voneinander getrennt werden können. Dazu wird der Schieber mit dem Flanschring 8 vakuumdicht an der einen Arbeitskammer angeflanscht, während auf der gegenüberliegenden Seite die Verbindung zur anderen Arbeitskammer mit Hilfe des Flanschrings 9 vorgenommen wird. Diese Flanschringe können auf den jeweiligen Seitenwänden 4 bzw. 5 angeschweißt sein.

Nachdem nun der prinzipielle Aufbau eines solchen Schiebers beschrieben worden ist, wird im folgenden anhand der Figur 2 ein Ausführungsbeispiel des Schiebers beschrieben, der die erfindungsgemäßen Merkmale aufweist. In dem in Figur 2 dargestellten Längsschnitt hat der Schieber eine Stellung eingenommen, in der er die in der Seitenwand 4 ausgebildete Öffnung 6 dichtend abschließt. Der Schieber 2 ist zweiteilig ausgebildet und besteht aus einem Schieberhauptteil 10 und aus einem mit dem Schieberhauptteil zusammenwirkenden Schieberteller 11. Die Form des Schiebertellers 11 ist auf die jeweilige Form der zu verschließenden Durchgangsöffnung 6 abgestimmt. Im Falle einer Rundöffnung, wie das in Figur 1 dargestellt ist, kann der Schieberteller 11 ebenfalls eine runde Form besitzen, während die Form des Schieberhauptteils 10 dem Schiebergehäuse angepaßt ist, so daß die Führung des Schiebers über den Schieberhauptteil 10 beispielsweise seitlich an den Wänden des Schiebergehäuses stattfinden kann.

Am Schieberhauptteil 10 greift oben die Kolbenstange 3 an, die dort beispielsweise eingeschraubt werden kann. Durch Anheben und Absenken der Kolbenstange 3 mittels eines geeigneten linearen Antriebs kann der Schieber angehoben bzw. abgesenkt werden. Der Schieberteller 11 steht mit dem Schieberhauptteil 10 mittels einer Zugfeder 18 in Verbindung. Diese Zugfeder ist zwischen einem Stift 17, der am Schieberhauptteil 10 angebracht ist und einem Stift 19, der am Schieberteller angebracht ist, eingespannt und versucht daher den Schieberteller 11 entgegen der Pfeilrichtung P auf den Schieberhauptteil 10 hin zu beaufschlagen.

Auf seiner dem Schieberhauptteil 10 zugewandten Fläche ist der Schieberteller 11 mit einer Keilnase 15 versehen, die mit einer Keilfläche 16 in einer entsprechenden Einkerbung 33 des Schieberhauptteils 10 in noch näher zu erläuternder Weise zusammenarbeitet. Die korrespondierenden Keilflächen der Keilnase 15 und der Einkerbung 33 sind so angeordnet, daß sie im wesentlichen symmetrisch zur Mittelachse A-A verlaufen. Die Mittelachse A-A definiert den Mittelpunkt der Öffnungen 6 und 7.

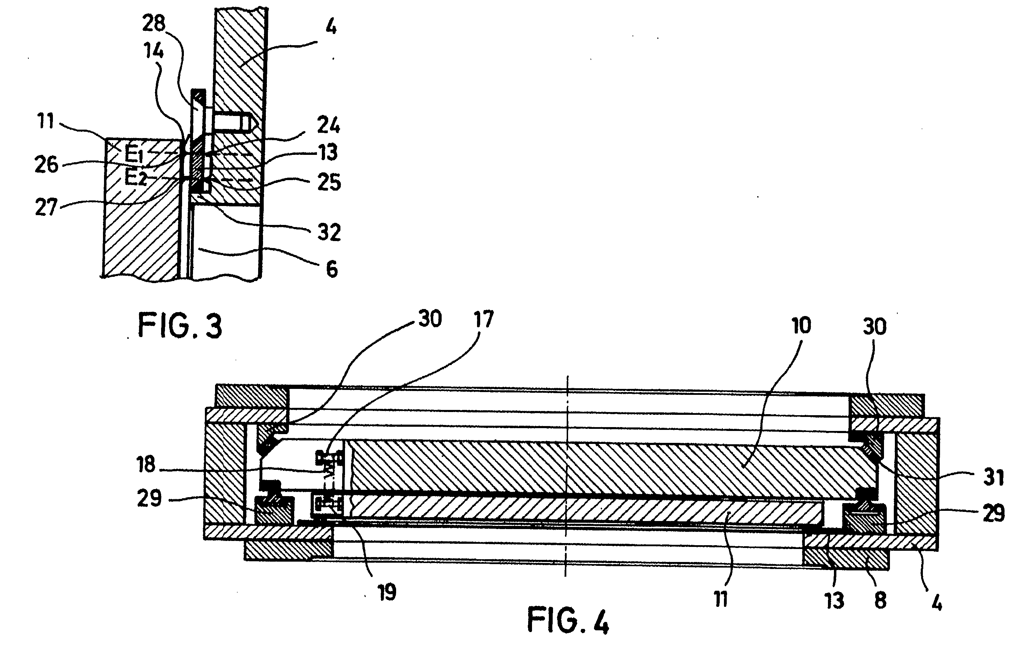

Am Boden 22 des Schieberhäuses 1 sind ebenso wie am nicht näher gezeigten Deckel die Seitenwände 4 und 5 jeweils über Schrauben 34 befestigt. Desweiteren steht vom Boden 22 ein Anschlag 20 ab, auf dem der Schieberteller 11 in der gezeigten Schließstellung aufsitzt. Zu erkennen ist weiterhin, daß in den Flanschringen 8 bzw. 9 Schraublöcher 21 bzw. 23 vorhanden sind, über die der Anschluß an die zu verschließenden Kammern hergestellt werden kann. Die Flanschringe sind, wie dargestellt, auf die Außenwände aufgeschweißt. Die eigentliche Ausbildung des Dichtbereichs wird nun im folgenden anhand von Figur 3 erläutert, in der der Bereich DIII der Figur 2 im Detail dargestellt ist. Dort ist zu sehen, daß von dem Schieberteller 11 in Richtung auf die Innenwand 4 hin abstehende Dichtschneiden 26 und 27 ausgebildet sind. Die Dichtschneiden haben im Querschnitt die Form eines spitzwinkeligen Dreiecks und laufen an der Dichtfläche 14 des Schiebertellers 11 durchgehend um. Dabei läuft die Dichtschneide 27 in Bezug auf die Achse A-A der Figur 2 mit einem geringeren Radius um, während die äußere Dichtschneide 26 kreisförmig mit einem etwas größeren Radius umläuft. An der Innenfläche der Wand 4 ist mittels einiger weniger Schrauben 28 der Dichtring 13 fixiert. Darüber hinaus liegt der Dichtring noch auf einem umlaufenden Kragen 32 auf, der sich von der Wand 4 nach innen in Richtung auf den Schieberteller 11 erstreckt.

Von der Innenwand 4 stehen darüber hinaus die Stützschneiden 24 und 25 ab, die ebenfalls kreisförmig an der Innenfläche der Öffnung 6 herum verlaufen und im Querschnitt die Form eines spitzwinkeligen Dreiecks aufweisen. Der Radius der Stützschneide 25 entspricht dem Radius der Dichtschneide 27, während die Stützschneide 24 mit dem selben Radius wie die Dichtschneide 26 umläuft. In der Schließstellung ist der Schieberteller 11 so angeordnet, daß die jeweiligen Vorderkanten bzw. Spitzen der Stützschneide 24 und der Dichtschneide 26 exakt aufeinander weisen, d.h. in der Ebene $E_1$ liegen. Dasselbe gilt für die Stützschneide 25 und die Dichtschneide 27, deren Spitzen ebenfalls exakt aufeinander weisen und in der Ebene $E_2$ liegen.

Wenn der Schieberteller 11 in Richtung des Pfeiles P, d.h. in Axialrichtung, auf die Wand 4 zu beaufschlagt wird, wird der Dichtring 13, der aus üblichen Dichtmaterialien wie Metallringen, Gummi- oder Kunststoffringen bestehen kann, zwischen den jeweiligen Stützschneiden bzw. Dichtschneiden festgeklemmt, wobei aufgrund der kleinen Berührungsflächen lokal sehr hohe Drücke an den Auftreffstellen der Vorderkanten jeweils stattfinden.

Aufgrund der Lagerung mit Hilfe der Schrauben 28 ist der Stützring dabei schwimmend gehalten, d.h. er kann sich axial zumindest in Richtung auf die Wand 4 etwas verschieben, und stützt sich lediglich auf den Stützschneiden 24 bzw. 25 in Axialrichtung ab. Eine Verbiegung oder Scherung des Stützrings findet dabei nicht statt. Die Schrauben 28 ermöglichen außerdem ein einfaches Auswechseln derartiger Dichtringe.

In der Draufsicht auf den quergeschnittenen Schieber und das Schiebergehäuse, wie es in Figur 4 dargestellt ist, ist weiterhin zu sehen, daß der Schieberhauptteil 10 in den Eckbereichen jeweils mit Führungen 30 bzw. 29 zusammenarbeitet. Diese Führungen bewirken, daß sich der Hauptteil 10 lediglich in der Verschieberichtung der Kolbenstange 3, nicht aber auch in Axialrichtung verschiebt. Zur Führung können in bekannter Weise beispielsweise Gleitlager 31 oder dergl. verwendet werden. Die schräge Ausbildung der Führungen 30 führt außerdem dazu, daß auch ein in der Figur 4 nach rechts und links sonstmögliches Auswandern des Schieberhauptteils unterbunden ist, so daß der Schieber als einzigen Bewegungsfreiheitsgrad die Verschieberichtung in Richtung des Pfeiles B der Figur 2 hat.

Der beschriebene erfindungsgemäße Schieber arbeitet wie folgt:

In der nicht gezeigten Offenstellung, in der sich der Schieber im oberen Teil des Gehäuses befindet, liegt der Schieberteller 11 aufgrund der Federn 18 mit seiner dem Schieberhauptteil zugewandten Fläche auf dem Schieberhauptteil an. Der in Figur 2 zu erkennende Spalt S existiert in dieser Stellung nicht. Nun wird, wenn die Öffnung 6 verschlossen werden soll, die Kolbenstange 3 mittels eines nicht näher gezeigten Antriebs in Figur 2 nach unten gefahren, so daß der Schieber von oben innerhalb des Schiebergehäuses 2 über die Kontur der Öffnung 6 geschoben wird. Da der Schieberteller 11 unmittelbar auf dem Schieberhauptteil anliegt, ist die Gesamtbreite des vom Schieberteller und dem Schieberhauptteil gebildeten Schiebers geringer, wie das in der Figur 2 gezeigten Schließstellung der Fall ist, so daß die Dichtschneiden an dem Dichtring ohne Berührung mit dem selben vorbeigeschoben werden können. Diese Bewegung des Schiebers nach unten erfolgt für den Schieberteller 11 so lange, bis dieser mit seiner Unterkante gegen den Anschlag 20 stößt. Dadurch wird eine weitere Bewegung des Schiebertellers nach unten unmöglich, d.h. der Schieberteller wird gestoppt. Der Anschlag ist dabei so eingestellt bzw. bemessen, daß beim Anstoßen die in Figur 3 gezeigte Zuordnung von Dichtschneiden zu Stützschneiden automatisch erhalten wird, d.h. diese Schneiden sind zueinander exakt ausgerichtet. Wenn nun die Kolbenstange 3 weiter nach unten gefahren wird, erfolgt eine Relativbewegung zwischen dem Schieberteller 11 und dem Schieberhauptteil 10, weil der Schieberteller diese Bewegung nicht mehr weiter mit ausführen kann. Das hat zur Folge, daß die Keilnase 15 mit ihrem Nasenrücken an der Keilfläche 16 des sich weiter nach unten bewegenden Schieberhauptteils 10 entlanggleitet, was wiederum eine Bewegung des Schiebertellers 11 in Richtung des Pfeiles P, d.h. in Axialrichtung der Öffnung 6 zur Folge hat. Dabei entsteht dann der Spalt S zwischen den einander zugewandten Flächen des Schiebertellers 11 und des Schieberhauptteils 10. Der Schieberhauptteil 10 kann aufgrund der Führungen 30 und 29 nicht ausweichen, so daß die gesamte erzeugte Kraft in eine Verschiebung des Schiebertellers 11 in Richtung der Öffnung 6 umgelenkt wird. Durch diese Kraftbeaufschlagung werden die einander zugeordneten Dicht- und Stützschneiden aufeinander zu bewegt und verklemmen den Dichtring 13 fest zwischen sich. Es stellt sich dann die gewünschte Dichtwirkung mit sehr hohen Schließdrücken ein, wobei Ablagerungen oder Verschmutzungen auf den Dichtflächen keine störenden Auswirkungen mehr haben. Beim Öffnen laufen die geschilderten Vorgänge in umgekehrter Reihenfolge ab. Wenn die Kolbenstange 3 zu Beginn der Öffnungsphase nach oben gefahren wird, kommen zunächst die Keilflächen 16 und die Keilnase 15 außer Eingriff miteinander, so daß ab einem bestimmten Zeitpunkt die Rückstellkraft der Feder 18 überwiegt, die dann den Schieberteller 11 wieder fest an den Hauptteil 10 drückt. Der Schieberteller wird also entgegen der Pfeilrichtung P axial zunächst vom Dichtring abgehoben. Mit dem weiteren Hochfahren der Kolbenstange 3 wird dann der Schieberteller durch die Wirkung der Feder 18 mit nach oben genommen, bis schließlich die Öffnung 6 freiliegt und ein Durchgang zwischen den beiden Öffnungen möglich ist.

Durch Untersuchungen wurde festgestellt, daß mit einer Schieberkonstruktion, wie sie in den Figuren 2 bis 4 dargestellt und erläutert worden ist, ein Vakuumschieber verwirklicht ist, der sich in staubhaltiger Atmosphäre problemlos einsetzen läßt und Leckraten besser als $10^{-3}$ mbar l/s aufweist. Dabei wurde herausgefunden, daß auch nach mehr als 1000 Öffnungs- und Schließbewegungen diese Leckrate noch nicht überschritten wird. Der beschriebene Schieber eignet sich daher insbesondere zur Verwendung in Vakuumspritzanlagen, in denen einerseits im Vakuum gearbeitet wird, andererseits immer eine staubhaltige Atmosphäre vorliegt. Natürlich ist der Anwendungsbereich des Schiebers nicht allein auf Vakuumplasmaspritzanlagen beschränkt, vielmehr kommt dessen Vorteile immer dort zur Geltung, wo über lange Zeiträume trotz staubhaltiger Atmosphären geringe Leckraten erwünscht sind. Es versteht sich, daß sich durch entsprechende Anpassung der Form des Schiebertellers nahezu beliebig geformte Öffnungen verschließen lassen, wobei dann die Dichtschneiden und Stützschneiden sowie der Dichtring jeweils entsprechend der Form der Öffnungen umlaufen.

**Patentansprüche**

1. Vakuumschieber insbesondere zum Einsatz in staubhaltiger Atmosphäre mit einem Schiebergehäuse (1), in dem der Schieber (2) in eine Offenstellung und in eine Schließstellung derart bewegbar ist, daß in der Schließstellung eine Dichtfläche (14) des Schiebers (2) gegen einen Dichtring (13) gedrückt wird, der innerhalb des Schiebergehäuses (1) um eine in der Schiebergehäusewand (4) ausgebildete, vom Schieber (2) in der Schließstellung verschlossene Öffnung (6) umläuft, wobei die Dichtfläche (14) des Schiebers (2) mit wenigstens einer umlaufenden Dichtschneide (26, 27) versehen ist, die von der Dichtfläche (14) absteht und in der Schließstellung gegen den Dichtring (13) gedrückt ist, und an der Innenfläche der Schiebergehäusewand (4) wenigstens ein umlaufender Stützvorsprung vorgesehen ist, über den sich der Dichtring (13) gegenüber der Schiebergehäusewand (4) abstützt, dadurch gekennzeichnet, daß der Stützvorsprung als Stützschneide (24, 25) ausgebildet ist, und daß die Dichtschneide (26, 27) und die Stützschneide (24, 25) so angeordnet sind, daß sich ihre jeweiligen Vorderkanten in der Schließstellung gegenüberstehen (E1, E2), so daß der Dichtring (13) in der Schließstellung zwischen wenigstens einem, eine Dichtschneide (26, 27) und Stützschneide (24, 25) umfassenden Schneidenpaar ohne Scherung eingeklemmt ist.

2. Vakuumschieber nach Anspruch 1, dadurch gekennzeichnet, daß an der Dichtfläche (14) des Schiebers (2) und an der Innenfläche der Schiebergehäusewand (4) jeweils zwei umlaufende Dichtschneiden (26, 27) bzw. Stützschneiden (24, 25) vorgesehen sind.

3. Vakuumschieber nach wenigstens einem der vorangegangenen Ansprüche, dadurch gekennzeichnet, daß der Dichtring (13) am Schiebergehäuse (1) mittels Schrauben (28) schwimmend befestigt ist.

4. Vakuumschieber nach wenigstens einem der vorangegangenen Ansprüche, dadurch gekennzeichnet, daß der Schieber (2) einen Schieberhauptteil (10) und einen Schieberteller (11) aufweist, wobei am Schieberteller (11) die Dichtfläche (14) ausgebildet ist und am Schieberhauptteil (10) eine Kolbenstange (3) zur Bewegung des Schiebers (2) angreift und mit Mitteln zur Kraftübertragung auf den Schieberteller (11) derart, daß dieser vom Schieberhauptteil (10) zum Herbeiführen der Schließstellung axial (P) auf den Dichtring (13) gepreßt und zum Beginn des Öffnungsvorgangs entgegengesetzt axial außer Eingriff mit dem Dichtring (13) gebracht wird.

5. Vakuumschieber nach Anspruch 4, dadurch gekennzeichnet, daß zur Kraftübertragung wenigstens ein Anschlag (20) vorgesehen ist, der die lineare Schieberbewegung des Schiebertellers (11) in einer Lage stoppt, in der die Dichtschneiden (26, 27) des Schiebertellers (11) mit den Stützschneiden (24, 25) ausgerichtet sind und daß an dem Schieberteller (11) eine Keilnase (15) und an dem Schieberhauptteil (10) eine korrespondierende Keilfläche (16) derart ausgebildet ist, daß der Schieberteller (11) beim Schließvorgang nach dem Aufsitzen auf dem Anschlag (20) durch eine weitere Linearbewegung (B) des Schieberhauptteils (10) axial (P) auf den Dichtring (13) zu gedrückt wird.

6. Vakuumschieber nach Anspruch 4 oder 5, dadurch gekennzeichnet, daß der Schieberteller (11) mit dem Schieberhauptteil (10) über Federn verbunden ist, die so angeordnet sind, daß sie den Schieberteller (11) von dem Dichtring (13) weg auf den Schieberhauptteil (10) zu beaufschlagen.

7. Vakuumschieber nach wenigstens einem der Ansprüche 4 bis 6, dadurch gekennzeichnet, daß im Schiebergehäuse (2) Führungen (29, 30) angeordnet sind, in denen der Schieberhauptteil so geführt ist, daß er keine quer zur Verschieberichtung erfolgende Bewegung ausführen kann.

8. Vakuumschieber nach wenigstens einem der vorangegangenen Ansprüche, dadurch gekennzeichnet, daß der Dichtring (13) aus Metall, Kunststoff oder Gummi besteht.

9. Verwendung eines Schiebers (2) nach wenigstens einem der vorangegangenen Ansprüche, zur Abdichtung von Arbeitskammern einer Vakuum-Plasmaspritzanlage.

**Revendications**

1. Vanne à tiroir pour vide destinée à être utilisée en particulier en atmosphère chargée de poussière et comprenant un corps de vanne (1) dans lequel la vanne (2) peut être déplacée dans une position d'ouverture et dans une position de fermeture de telle manière que dans la position de fermeture, une surface d'étanchéité (14) de la vanne à tiroir (2) soit pressée contre une bague d'étanchéité (13) qui entoure à l'intérieur du corps de vanne (1) une ouverture (6) réalisée dans la paroi de corps de vanne (4) et obturée par la vanne à tiroir (2) dans la position de fermeture, la surface d'étanchéité (14) de la vanne à tiroir (2) étant munie d'au moins une lame d'étanchéité (26, 27) circulaire qui dépasse de la surface d'étanchéité (14) et est pressée contre la bague d'étanchéité (13) dans la position de fermeture, au moins une saillie d'appui circulaire, par laquelle la bague d'étanchéité (13) prend appui par rapport à la paroi de corps de vanne (4), étant prévue sur la surface intérieure de la paroi de corps de vanne (4), caractérisée en ce que la saillie d'appui est réalisée sous forme de lame d'appui (24, 25) et en ce que la lame d'étanchéité (26, 27) et la lame d'appui (24, 25) sont disposées de telle manière que leurs bords avant se fassent face (E1, E2) dans la position de fermeture si bien que dans la position de fermeture, la bande d'étanchéité (13) est coincée sans cisaillement entre au moins une paire de lames comprenant une lame d'étanchéité (26, 27) et une lame d'appui (24, 25).

2. Vanne à tiroir pour vide selon la revendication 1, caractérisée en ce que deux lames d'étanchéité (26, 27) et lames d'appui (24, 25) circulaires sont prévues sur la surface d'étanchéité (14) de la vanne à tiroir (2) et sur la surface intérieure de la paroi de corps de vanne (4).

3. Vanne à tiroir pour vide selon au moins l'une des revendications précédentes, caractérisée en ce que la bague d'étanchéité (13) est fixée de manière flottante sur le corps de vanne (1) à l'aide de vis (28).

4. Vanne à tiroir pour vide selon au moins l'une des revendications précédentes, caractérisée en ce que la vanne à tiroir (2) présente une partie principale de vanne (10) et un plateau de vanne (11), la surface d'étanchéité (14) étant réalisée sur le plateau de vanne (11) et une tige de piston (3) destinée à déplacer la vanne à tiroir (2) agissant sur la partie principale de vanne (10) et en ce que des moyens de transmission de force sur le plateau de vanne (11) sont prévus de telle sorte que ledit plateau soit pressé axialement (P) sur la bague d'étanchéité (13) par la partie principale de vanne (10) afin de provoquer la position de fermeture et soit dégagé de la bague d'étanchéité (13) axialement au début de l'opération d'ouverture.

5. Vanne à tiroir pour vide selon la revendication 4, caractérisée en ce qu'il est prévu pour la transmission de force au moins une butée (20) qui bloque le déplacement linéaire du plateau de vanne (11) dans une position dans laquelle les lames d'étanchéité (26, 27) du plateau de vanne (11) sont alignées avec les lames d'appui (24, 25) et en ce qu'un nez conique (15) est réalisé sur le plateau de vanne (11) et une surface conique correspondante (16) sur la partie principale de vanne (10) de telle manière que le plateau de vanne (11), après avoir pris appui sur la butée (20) soit pressé lors de l'opération de fermeture axialement en direction de la bague d'étanchéité (13) par un nouveau déplacement linéaire (8) de la partie principale de vanne (10).

6. Vanne à tiroir pour vide selon la revendication 4 ou 5, caractérisée en ce que le plateau de vanne (11) est relié à la partie principale de vanne (10) par des ressorts qui sont disposés de telle sorte qu'ils sollicitent le plateau de vanne (11) pour l'écarter de la bague d'étanchéité (13) en direction de la partie principale de vanne (10).

7. Vanne à tiroir pour vide selon au moins l'une des revendications 4 à 6, caractérisée en ce que des guidages (29, 30) sont disposés dans le corps de vanne (2) dans lesquels la partie principale de vanne est guidée de telle manière qu'elle ne puisse pas effectuer de mouvement transversal à la direction de déplacement.

8. Vanne à tiroir pour vide selon au moins l'une des revendications précédentes, caractérisée en ce que la bague d'étanchéité (13) est en métal, en matière plastique ou en caoutchouc.

9. Utilisation d'une vanne à tiroir (2) selon au moins l'une des revendications précédentes pour l'étanchéification de chambres de travail d'une installation de pulvérisation de plasma sous vide.

**Claims**

1. Vacuum slide valve, more particularly for use in a dust-laden atmosphere, with a valve casing (1), in which the slide valve (2) can be moved into an open position and into a closed position in such a way that in the closed position a sealing face (14) of the slide valve (2) is pressed against a gasket (13) which inside the valve casing (1) runs around an opening (6) formed in the wall (4) of the valve casing and obturated by the slide valve (2) in the closed position, the sealing face (14) of the slide valve (2) having at least one circular sealing edge (26, 27) which is proud of the sealing face (14) and in the closed position is pressed against the gasket (13), and on the inside face of the valve casing wall (4) there is provided at least one circular supporting projection, by means of which the gasket (13) is supported relative to the valve casing wall (4), characterised in that the supporting projection is a supporting edge (24, 25), and that the sealing edge (26, 27) and the supporting edge (24, 25) are so disposed that their respective front edges oppose one another in the closed position (E1, E2), causing the gasket (13) to be clamped in the closed position without shear between at least one pair of edges comprising a sealing edge (26, 27) and a supporting edge (24, 25).

2. Vacuum slide valve according to claim 1, characterised in that two circular sealing edges (26, 27) and supporting edges (24, 25) are respectively provided on the sealing face (14) of the slide valve (2) and on the inside face of the valve casing wall (4).

3. Vacuum slide valve according to at least one of the preceding claims, characterised in that the gasket (13) in floatingly attached to the valve casing (1) by screws (28).

4. Vacuum slide valve according to at least one of the preceding claim, characterised in that the slide valve (2) has a main valve portion (10) and a valve disc (11), the sealing face (14) being formed on the valve disc (11) and a stem (3) engaging on the main valve portion (10) to move the slide valve (2), and with means for transmitting force to the valve disc (11) such that the main valve portion (10) presses the latter axially (P) onto the gasket (13) to produce the closed position and at the start of the opening operation is moved in the opposite direction axially out of engagement with the gasket (13).

5. Vacuum slide valve according to claim 4, characterised in that for transmitting force at least one stop (20) is provided which halts the linear valve movement of the valve disc (11) in a position in which the sealing edges (26, 27) of the valve disc (11) are aligned with the supporting edges (24, 25), and that on the valve disc (11) is formed a key head (15) and on the main valve portion (10) a corresponding key face (16), such that during the closure operation, after being seated on the stop (20), the valve disc (11) is pushed axially (P) towards the gasket (13) by means of a further linear movement (B) of the main valve portion (10).

6. Vacuum slide valve according to claim 4 or 5, characterised in that the valve disc (11) is connected to the main valve portion (11) by springs, which are so disposed that they apply the valve disc (11) away from the gasket (13) towards the main valve portion (10).

7. Vacuum slide valve according to at least one of claims 4 to 6, characterised in that in the valve casing (2) are disposed guides (29, 30) in which the main valve portion is located such that it is unable to execute any movement transverse to the direction of displacement.

8. Vacuum slide valve according to at least one of the preceding claims, characterised in that the gasket (13) is made of metal, plastic or rubber.

9. Use of a slide valve (2) according to at least one of the preceding claims, for sealing working chambers of a vacuum plasma-coating installation.

FIG.1

FIG.2

EP 0 258 475 B1

FIG. 3

FIG. 4